(19) Europäisches Patentamt
European Patent Office
Office européen des brevets

(11) **EP 4 640 928 A1**

(12) **EUROPEAN PATENT APPLICATION**
published in accordance with Art. 153(4) EPC

(43) Date of publication:
**29.10.2025 Bulletin 2025/44**

(21) Application number: **23907429.7**

(22) Date of filing: **15.11.2023**

(51) International Patent Classification (IPC):
*C25D 7/06* (2006.01)      *C25D 5/36* (2006.01)
*C25D 5/50* (2006.01)      *C22C 38/18* (2006.01)
*C22C 38/00* (2006.01)      *C21D 8/02* (2006.01)
*B21C 47/02* (2006.01)

(52) Cooperative Patent Classification (CPC):
**B21C 47/02; C21D 8/02; C22C 38/00; C22C 38/18;
C25D 5/36; C25D 5/50; C25D 7/06**

(86) International application number:
**PCT/KR2023/018351**

(87) International publication number:
**WO 2024/136143 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 KR 20220179265**

(71) Applicant: POSCO Co., Ltd
**Pohang-si, Gyeongsangbuk-do 37859 (KR)**

(72) Inventors:
• **JO, Min-Ho**
  **Pohang-si, Gyeongsangbuk-do 37877 (KR)**
• **JEON, Jea-Chun**
  **Pohang-si, Gyeongsangbuk-do 37877 (KR)**
• **HONG, Young-Kwang**
  **Pohang-si, Gyeongsangbuk-do 37877 (KR)**

(74) Representative: **Meissner Bolte Partnerschaft
mbB
Patentanwälte Rechtsanwälte
Postfach 86 06 24
81633 München (DE)**

(54) **NI-PLATED STEEL SHEET FOR CANNING, AND MANUFACTURING METHOD THEREFOR**

(57)      An Ni-plated steel sheet for canning, and a manufacturing method therefor are provided. The Ni-plated steel sheet of the present invention comprises, by wt%, 0.020-0.060% of C, 0.050% or less of Si, 0.1-0.6% of Mn, 0.010-0.060% of Al, 0.015% or less of P, 0.015% or less of S, 0.006% or less of N, Cr in an amount less than 0.030%, and the balance of Fe and other inevitable impurities, wherein the Ni-plated steel sheet has a steel microstructure having a component index, represented by relation 1, of 0.85 or less, having an ASTM grain size number satisfying 11.0-11.7, and comprising a carbide with an average circle equivalent diameter satisfying 1.0-2.0 $\mu$m, and an Fe-Ni alloy layer with a thickness of 0.6-1.4 $\mu$m is formed on the surface thereof.

EP 4 640 928 A1

**Description**

Technical Field

The present disclosure relates to a Ni-plated steel sheet having excellent strength and workability, and a method for manufacturing the same, and more particularly, a Ni-plated steel sheet having excellent strength and workability used for an electric vehicle battery case, and a method for manufacturing the same.

Background Art

In the case of a cylindrical can used in a cylindrical battery case, it may be common to perform nickel (Ni) plating on a steel sheet to overcome corrosion caused by electrolyte entering a battery. Recently, as demand for electric vehicles has increased, demand for cylindrical battery case materials for electric vehicles has increased significantly.

Demand for high-temperature strength in a battery case material has been increased in order to ensure battery safety at high temperature. When a battery is heated by factors such as overcurrent, an abnormal chemical reaction may occur, such that the temperature may rise to approximately 600°C. Accordingly, as a battery case material may be exposed to a high temperature of several hundred degrees (°C) momentarily, heat resistance properties may need to be ensured such that the shape thereof may be maintained at high temperature. When a car is driven, the battery case may be deformed due to a temperature increase, which may affect the driving of the car. To prevent this, deformation at high temperature may also need to be strictly suppressed.

Heat resistance properties of an electric vehicle battery may be evaluated in various manners. For example, stability of a cell may be evaluated by heating an electric vehicle battery to a temperature of about 600°C. In order to prevent deformation of the battery, the battery case material may need to satisfy a yield strength of 80MPa or higher at 600°C.

In addition to properties at high temperature, properties at room temperature may also be important for the battery case material. When strength at room temperature is low, deformation may occur after filling the battery, and to prevent this, a specific level of yield strength or higher may be required.

Also, additional room temperature properties may be required in terms of workability of the material. Since a cylindrical battery case requires a multi-stage processing process such as drawing and ironing during molding, in addition to the high temperature properties, processing properties at room temperature may also be required. When yield strength is a specific level or more, mold wear may become severe during processing, such that it may be necessary to replace the mold frequently, which may be problematic and may need to be avoided, and a specific level of high elongation may also be required to form the desired shape without cracks in the can.

Generally, a cylindrical battery case may be plated with Ni to prevent corrosion by internal electrolyte or the atmosphere during processing, but there may also be required characteristics for the plating layer. Generally, in the case of Ni plating, plating may be performed with a thickness of 1 $\mu$m or more, and in order to prevent the plating layer from peeling off during processing, adhesion may be improved through heat treatment for forming an Fe-Ni alloy layer on an interfacial surface portion through diffusion between the Fe of the steel sheet and the Ni of the plating layer. When the thickness of the alloy layer is excessively low, it may be difficult to ensure adhesion between the steel sheet and the plating layer, and when the thickness is excessively high, the Fe component may be exposed to the surface of the plating layer, such that rust may be formed due to Fe oxidation, and thus, it may be necessary to form an alloy layer having an appropriate thickness.

Korean Laid-Open Patent Publication No. 2019-0078406 discloses a method of using fine precipitates by adding Nb, Cr, W, or the like, to ultra-low carbon steel having C 0.003% or less to ensure room temperature and high temperature properties. The properties may be improved by fine precipitates, but relatively expensive precipitate-forming elements may need to be added and a steelmaking process load may increase for production of ultra-low carbon steel.

Korean Laid-Open Patent Publication No. 1999-0053991 discloses a method of performing secondary rolling on general low carbon steel having C 0.04-0.06% to produce a high-strength steel sheet for a can. The most common method for increasing strength of a can material may be to perform a secondary reduction of 20-30% after recrystallization annealing, such that strength may be greatly improved by work hardening. However, it may be difficult to ensure can workability because an elongation may decrease significantly at such a high level of reduction.

Korean Laid-Open Patent Publication No. 2018-0109964 discloses a method for improving strength through solid-solution strengthening by adding a large amount of N of 130 ppm or more and to increase an elongation by applying a low secondary reduction rate of 20% or less. However, when adding a large amount of N, which may be an interstitial element, component deviation may easily occur, and when component deviation occurs, it may be highly likely that material deviation occurs. Accordingly, additional efforts may be necessary during the steelmaking process in order to control the component deviation to a low level.

Korean Laid-Open Patent Publication No. No. 2021-0091795 discloses a method for ensuring a balance between strength and ductility by applying a relatively lower secondary reduction rate of 15% or less to additionally increase strength using precipitation strengthening through the addition of Ti, thereby reducing the decrease in elongation due to work hardening. However, the addition of Ti may form a great deal of inclusions in the steelmaking process due to high oxygen affinity, which may reduce cleanliness. A great deal of inclusions in steel may become a starting point of cracks during the forming process, such that additional efforts may be necessary to remove the inclusions.

Detailed description of present disclosure

Technical problems to solve

An aspect in the present disclosure is to manufacture a Ni-plated steel sheet having excellent strength and workability, which may be used as a material for a battery case of an electric vehicle.

The technical problems to be achieved in the present disclosure are not limited to the technical problems mentioned above, and other technical problems not mentioned herein will be clearly understood by a person having ordinary skill in the technical field to which the present disclosure belongs from the description provided below.

Solution to Problem

An aspect in the present disclosure provides a Ni-plated steel sheet for canning

including by weight%, C: 0.020-0.060%, Si: 0.050% or less, Mn: 0.1-0.6%, Al: 0.010-0.060%, P: 0.015% or less, S: 0.015% or less, N: 0.006% or less, Cr: less than 0.030%, and the balance of Fe and inevitable impurities, and having a component index of 0.85 or less, the component index represented by relational expression 1,
wherein an ASTM grain size satisfies 11.00-11.70,
wherein the steel sheet has a steel microstructure containing carbides having an equivalent circular average size satisfying 1.0-2.0 $\mu$m,
wherein an Fe-Ni alloy layer having a thickness of 0.6-1.4 $\mu$m is formed on a surface thereof:

```
[Relational expression 1]

component index = C×10 + Mn
```

where C and Mn indicate weight% of C and Mn, respectively.

A room-temperature yield strength of the Ni-plated steel sheet satisfies 320-400MPa, a room-temperature elongation satisfies 30% or more, and a yield strength at 600°C satisfies 80MPa or more.

Another aspect in the present disclosure provides a method of manufacturing an Ni-plated steel sheet for canning including

reheating a steel slab satisfying the component composition described above and relational expression 1 at 1150°C or higher;
manufacturing a hot-rolled steel sheet by hot finishing rolling the reheated steel slab at $Ar_3$ or higher;
cooling the hot-rolled steel sheet and coiling the steel sheet at a temperature of 580-720°C;
manufacturing a primary-cold-rolled steel sheet by primary-cold-rolling the coiled hot-rolled steel sheet at a reduction ratio of 78-90%;
annealing the primary-cold-rolled steel sheet at a temperature of 630-810°C;
manufacturing a secondary-cold-rolled steel sheet by secondary-cold-rolling the annealed steel sheet at a reduction ratio of 0.6-1.2%;
manufacturing a Ni-plated steel sheet by Ni-electroplating the secondary-cold-rolled steel sheet; and
forming an Fe-Ni alloy layer having a thickness of 0.6-1.4 $\mu$m on a surface of a cold-rolled steel sheet by performing alloying-annealing the Ni-plated steel sheet at a temperature of 650-700°C for a period of time in which an alloying index defined in relational expression 2 satisfies 2.10-2.60:

$$[\text{Relational expression 1}]$$

$$\text{component index} = C \times 10 + Mn$$

where C and Mn indicate weight% of C and Mn, respectively.

$$[\text{Relational expression 2}]$$

$$\text{alloying index} = (2 - (700 - T) / 100) \times t^{0.1}$$

where T indicates temperature (°C) and t indicates time (seconds).

The Ni-electroplating is performed in a thickness range of 0.6-5.0 $\mu$m.

Advantageous Effects of Invention

According to an aspect of the present disclosure, a Ni-plated steel sheet having a room-temperature yield strength of 320-400MPa, a room-temperature elongation of 30% or more, a yield strength at 600°C of 80MPa or more, and an Fe-Ni alloy layer having a thickness of 0.6-1.4 $\mu$m, which may be used for a cylindrical battery case.

Best Mode for Invention

Hereinafter, the present disclosure will be described.

The present disclosure relates to a Ni-plated steel sheet used for a battery case of an electric vehicle after can-molding. As for the material for the purpose, strength of an appropriate level or higher may be necessary to maintain the shape at room temperature and high temperature, and also, the balance between strength and elongation may need to be optimized in consideration of elongation decreasing when strength is increased to ensure workability. Also, as for the Ni plating layer, corrosion resistance to prevent corrosion and adhesion of a certain level or higher to prevent peeling off during processing may need to be ensured.

Accordingly, the present inventors repeatedly conducted research and experiments to achieve the purpose, and as a result, discovered that a plated steel sheet having the above target properties may be manufactured through optimization of the type and content of alloy elements and manufacturing conditions, and presented the present disclosure.

Hereinafter, the composition of the cold-rolled steel sheet provided in the present disclosure will be described in detail. In this case, unless otherwise indicated, the content of each component may indicate weight%.

Carbon (C): 0.020-0.060%

Carbon (C) may be added to improve strength of steel sheets. When the content is low, strength may decrease and it may be difficult to use as a structural material, such that a content of 0.020% or more may be preferable. Also, to lower the content to less than 0.020%, the load of the steelmaking process may increase, which may reduce productivity. When the carbon (C) content is higher than necessary, strength may increase excessively, such that a die wear rate may increase during forming and an elongation may decrease, such that formability may be reduced, and thus, it may be preferable to control the content to 0.060% or less. More preferable, the content may be controlled in the range of 0.030-0.050%.

Silicon (Si): 0.050% or less

Si may be used as a deoxidizer and may contribute to improvement of strength by solid-solution strengthening, such that it may be difficult to completely exclude Si. However, when the content thereof is excessive, Si-based oxides may be generated on the surface during annealing, which may cause defects during plating and may reduce plating properties. Accordingly, considering this, it may be preferable to control an upper limit to 0.050% or less, and more preferably, to 0.030% or less.

Manganese (Mn): 0.1-0.6%

Mn may prevent hot shortness by solid-solution S by combining with solid-solution S in steel and precipitating as MnS. To obtain this effect, it may be preferable to include 0.1% or more. Also, Mn may be solid-solute in steel and may increase strength of the steel together with C. However, when the content is excessive, workability of the steel may decrease, and thus, it may be preferable to include Mn by 0.6% or less.

Aluminum (Al): 0.010-0.060%

Al may have a strong deoxidizing effect, and may react with N in the steel and may precipitate AlN, thereby preventing formability from decreasing due to solid-solution N. In order to obtain the effect, it may be necessary to add Al in an amount of 0.010% or more. However, when a large content thereof is added, the effect of additional addition may be minimal, such that the content may be limited to 0.060% or less.

Phosphorus (P): 0.015% or less

Addition of a certain amount or less of P may not significantly reduce ductility of steel and may increase strength, but when P is added in excess of 0.015%, P may be segregated at grain boundaries, may excessively harden the steel and may reduce elongation, such that it may be preferable to limit the content to 0.015% or less.

Sulfur (S): 0.015% or less

Since S may cause red-hot embrittlement in solid-solution, such that the precipitation of MnS may need to be induced through addition of Mn. As the content of S increases, the corresponding level of Mn may need to be additionally added, and thus, it may not be preferable to include S in a large amount. Accordingly, an upper limit of S may be limited to 0.015%.

Nitrogen (N): 0.006% or less

N may be inevitably contained in steel, and N present in a solid-solution state may cause aging, and may significantly reduce workability. In order to reduce the decrease in ductility due to unnecessary aging, it may be preferable to limit an upper limit to 0.006% or less.

Chromium (Cr): less than 0.030%

Cr may improve workability when added in a small amount, and may be often added to a processing material. However, when added, Cr may concentrate on the surface and may form Cr-based oxide, which may reduce conductivity, such that a surface defect may occur due to underplating during electroplating. In particular, when the plating thickness is low, several μm or less, impact on the surface may increase, such that it may be preferable to limit the content to less than 0.030%. More preferably, the content may be controlled to be 0.020% or less.

Component index represented by relational expression 1 may be 0.85 or less

The present inventors defined and introduced the component index as an index correlated with strength increasing by C and Mn as in relational expression 1. When the component index defined by relational expression 1 exceeds 0.85, yield strength may be excessively high, such that it may be difficult perform processing.

$$[\text{Relational expression 1}]$$

$$\text{component index} = C \times 10 + Mn$$

(C and Mn may indicate weight% of C and Mn, respectively)

The remainder of the present disclosure is iron (Fe). However, in a general manufacturing process, inevitable impurities may be inevitably added from raw materials or an ambient environment, and thus, impurities may not be excluded. A person skilled in the art of a general manufacturing process may be aware of the impurities, and thus, the descriptions of the impurities may not be provided in the present disclosure.

Thereafter, a microstructure of the cold-rolled steel sheet of the present disclosure may be described.

The cold-rolled steel sheet of the present disclosure may have a mixed structure of ferrite and cementite, and a structure fraction thereof may include 90% or more of ferrite and 10% or less of cementite in area% preferably. When cementite is excessive, cracks may be easily created during processing, which may reduce workability.

The microstructure of the cold-rolled steel sheet of the present disclosure may satisfy an ASTM grain size of 11.00-11.70.

Also, the microstructure of the cold-rolled steel sheet of the present disclosure may include carbides of which an equivalent circular average size satisfies 1.0-2.0 $\mu$m. Generally, carbon (C) may combine with Fe and may be present in the form of carbides, and when the size of the carbide is small, burrs may easily occur during shearing during processing, such that the shear cross-sectional shape may be defective. When the size of carbides is large, cracks may be created during forming. Considering this, it may be preferable to limit the equivalent circular average size of carbide in the range of 1.0-2.0 $\mu$m in the present disclosure.

An Fe-Ni alloy layer having a thickness of 0.6-1.4 $\mu$m may be formed on the surface of the cold-rolled steel sheet of the present disclosure. When the thickness of the Fe-Ni alloy layer is too small, it may be difficult to ensure plating adhesion, and when the thickness is too great, the Fe component included in the steel sheet may be exposed to the surface of the plating layer, such that it may be difficult to ensure corrosion resistance.

As for the Ni-plated steel sheet of the present disclosure having the alloy composition and the microstructure as above, a room-temperature yield strength may satisfy 320-400 MPa, a room-temperature elongation may satisfy 30% or more, and a yield strength at 600°C may satisfy 80 MPa or more, such that the steel sheet may be effectively used as a Ni-plated steel sheet for canning.

Thereafter, a method of manufacturing the Ni-plated steel sheet according to an embodiment of the present disclosure may be described in detail.

The method of manufacturing the Ni-plated steel sheet for canning of the present disclosure may include reheating a steel slab satisfying relational expression 1 described above at 1150°C or higher; manufacturing a hot-rolled steel sheet by hot finishing rolling the reheated steel slab at Ar$_3$ or higher; cooling the hot-rolled steel sheet and coiling the steel sheet at a temperature of 580-720°C; manufacturing a primary-cold-rolled steel sheet by primary-cold-rolling the coiled hot-rolled steel sheet at a reduction ratio of 78-90%; annealing the primary-cold-rolled steel sheet at a temperature of 630-810°C; manufacturing a secondary-cold-rolled steel sheet by secondary-cold-rolling the annealed steel sheet at a reduction ratio of 0.6-1.2%; manufacturing a Ni-plated steel sheet by Ni-electroplating the secondary-cold-rolled steel sheet; and forming an Fe-Ni alloy layer having a thickness of 0.6-1.4 $\mu$m on a surface of a cold-rolled steel sheet by performing alloying-annealing the Ni-plated steel sheet at a temperature of 650-700°C for a period of time in which an alloying index defined in relational expression 2 satisfies 2.10-2.60.

Slab reheating

First, in the present disclosure, the steel slab may be reheated to a temperature of 1150°C or higher. Since re-solid-solution of various precipitates formed in the steel during slab manufacturing may necessary, it may be preferable to use a temperature of 1150°C or higher. Preferably, reheating may be performed in the range of 1150-1300°C.

Hot-rolling

Thereafter, in the present disclosure, the reheated slab may be hot-finishing rolled at a temperature of Ar$_3$ or higher and a hot-rolled steel sheet may be manufactured. The reason for limiting the hot-rolling finishing temperature to Ar$_3$ or higher may be to perform rolling in an austenite single-phase region. When rolling in the two-phase region, rolling stability may be reduced due to uneven material.

Coiling of hot-rolled steel sheet

In the present disclosure, the hot-rolled steel sheet may be cooled and coiled at 580-720°C. The grain size of the hot-rolled steel sheet may change depending on the coiling temperature. When the temperature is low, grains may be formed finely, and when the temperature is high, grains may be formed coarsely. Also, when the coiling temperature is excessively high, coarse carbides may be formed, which may cause cracks during can processing. In order to obtain grain and carbide sizes appropriate for strength and workability, it may be preferable to control the coiling temperature of the hot-rolled steel sheet to 580-720°C.

Cold-rolling of hot-rolled steel sheet

Thereafter, in the present disclosure, the coiled hot-rolled steel sheet may be primary-cold-rolled at a reduction ratio of 78-90% and a primary-cold-rolled steel sheet may be manufactured. The primary cold reduction ratio may be important in increasing strength at high temperature. As the reduction ratio increases, the recrystallization nuclei may be smoothly generated during annealing, such that grains may be refined and high-temperature strength may increase. In order to obtain a sufficient level of high-temperature strength, it may be preferable to apply a reduction ratio of 78% or more. However, when exceeding 90%, the deformation resistance due to rolling may increase excessively, such that it may be difficult to perform rolling and the shape after rolling may be defective. Considering this, it may be preferable to determine the cold reduction ratio to the range of 78-90%. The scale generated during hot-rolling may be removed by adding a pickling process before cold-rolling.

Annealing of primary-cold-rolled steel sheet

In the present disclosure, the primary-cold-rolled steel sheet may be annealed at a temperature of 630-810°C and an annealed steel sheet may be manufactured. The main purpose of annealing the cold-rolled steel sheet may be to remove internal stress formed during cold-rolling and to ensure workability. To this end, it may be necessary to perform an annealing process at a sufficiently high temperature for complete recrystallization. To allow recrystallization in the cold-rolled steel sheet having the composition of the present disclosure, the temperature of 630°C or higher may be necessary. However, when the temperature exceeds 810°C, it may be difficult to ensure strength at high temperature due to grain growth, and a sheet fracture defect due to strength reduction may occur during annealing, such that it may be preferable to control the above-mentioned temperature or lower.

Secondary rolling of annealed steel sheet

Thereafter, the annealing steel sheet may be cold-rolled at a reduction ratio of 0.8-1.8% and a secondary-cold-rolled steel sheet may be manufactured. Since high temperature is applied to the annealing steel sheet, the shape thereof may generally be defective, such that it may be preferable to perform the secondary-cold-rolling at a reduction ratio of 0.8-1.8% to improve the shape and to obtain the desired roughness. When the cold reduction ratio is low, less than 0.8%, it may be difficult to obtain the effects of improving the shape and obtaining roughness, and when exceeding 1.8%, strength may increase to the desired level or higher.

Ni plating of secondary-cold-rolled steel sheet

In the present disclosure, Ni may be electroplated on the secondary-cold-rolled steel sheet and a plated steel sheet may be manufactured. It may be preferable to perform Ni plating to ensure corrosion resistance with respect to battery electrolyte and atmosphere. The plating thickness may vary depending on the forming amount and electrolyte type, and it may be preferable to perform plating in a thickness range of 0.6-5.0 $\mu$m when considering roughness. In the case of hot-dip plating, it may be difficult to control the plating thickness to a specific or less, and the thickness deviation may increase, which may not be preferable for a cylindrical battery case material.

Alloying-annealing of plated steel sheet

Subsequently, in the present disclosure, the plated steel sheet may be annealed and an alloying-annealed steel sheet may be manufactured. The Ni plating layer may not have excellent adhesion to the steel sheet immediately after electroplating, and may easily be removed during processing. To prevent this, it may be necessary to form an Fe-Ni alloy layer between the Ni plating layer and the steel sheet by diffusion by annealing at a high temperature. When the annealing temperature for the alloy layer is low, the thickness of the Fe-Ni alloy layer may decrease, such that it may be difficult to ensure adhesion and thus, it may be preferable to anneal at a predetermined temperature or higher. When the annealing temperature is high, the thickness of the alloy layer may increase, such that the Fe component included in the steel sheet may be exposed to the surface of the plating layer, it may be difficult to ensure corrosion resistance, and thus, it may be preferable to anneal at a predetermined temperature or lower.

The present inventors found that the thickness of the alloy layer simultaneously ensuring adhesion and corrosion resistance was 0.6-1.4 $\mu$m, and that to this end, it may be preferable to perform alloying-annealing at a temperature of 650-700°C for a period of time in which the alloying index defined by relational expression 2 satisfied 2.1-2.6. The present inventors found that the alloying index, which is linearly proportional to temperature and exponentially proportional to time, was related to the thickness of the alloy layer, and formulated the alloying index, and when the alloying index was in the range of 2.10-2.60, an alloy layer having the desired thickness was formed.

[Relational expression 2]

$$\text{alloying index} = (2 - (700 - T) / 100) \times t^{0.1}$$

Herein, T may indicate temperature (°C) and t may indicate time (seconds).

However, the relationship between the alloying temperature and time and the thickness of the alloy layer is limited to the steel sheet manufactured by the components and manufacturing conditions described in the present disclosure, and may not be applicable to steel sheets having different components and manufacturing processes. For example, in the case of alloying-annealing without going through recrystallization annealing after primary-cold-rolling, when recrystallization and alloying occur together, the diffusion rate of the interfacial surface portion of Fe and Ni may be high, such that the thickness of the alloy layer may increase excessively.

Mode for Invention

Hereinafter, the present disclosure may be described more specifically through examples. However, it should be noted that the examples as below are only intended to describe the present disclosure in greater detail, and are not intended to limit the scope of the rights in the present disclosure, because the scope of the rights of the present disclosure is determined by the matters described in the claims and matters reasonably inferred therefrom.

(Example)

A steel sheet having the composition in Table 1 below and the manufacturing conditions in Table 2 below was manufactured. The components are actual values, and each slab having the corresponding components was manufactured. The slab was reheated to 1220°C, hot-rolled at 900°C or higher to the same thickness of 4 mm, and coiled at the temperature in Table 2 below. The coiled hot-rolled steel sheet was cold-rolled at the reduction ratio in Table 2 below, and annealed at the temperature in Table 2 for 30 seconds, thereby manufacturing an annealed steel sheet. The annealed steel sheet was secondary-cold-rolled at the reduction ratio in Table 2 below, thereby manufacturing a secondary-cold-rolled steel sheet. The secondary-cold-rolled steel sheet was Ni-electroplated to have a thickness of 1.5 μm equally, and alloying-annealed for 30 seconds at the temperature in Table 2 below, thereby manufacturing the final plated steel sheet.

[Table 1]

| Classifi cation | Component content (weight%) | | | | | | | |
|---|---|---|---|---|---|---|---|---|
| | C | Si | Mn | Cr | Al | P | S | N |
| Inventiv e steel 1 | 0.027 | 0.014 | 0.21 | 0.016 | 0.037 | 0.007 | 0.006 | 0.003 |
| Inventiv e steel 2 | 0.042 | 0.015 | 0.25 | 0.015 | 0.036 | 0.006 | 0.006 | 0.003 |
| Inventiv e steel 3 | 0.055 | 0.015 | 0.23 | 0.016 | 0.038 | 0.007 | 0.006 | 0.003 |
| Inventiv e steel 4 | 0.041 | 0.015 | 0.23 | 0.016 | 0.034 | 0.007 | 0.006 | 0.003 |
| Inventiv e steel 5 | 0.041 | 0.015 | 0.33 | 0.016 | 0.034 | 0.007 | 0.006 | 0.003 |
| Inventiv e steel 6 | 0.040 | 0.014 | 0.25 | 0.014 | 0.037 | 0.007 | 0.006 | 0.003 |
| Inventiv e steel 7 | 0.040 | 0.016 | 0.23 | 0.015 | 0.038 | 0.006 | 0.006 | 0.003 |
| Inventiv e steel 8 | 0.039 | 0.015 | 0.26 | 0.014 | 0.034 | 0.006 | 0.006 | 0.003 |
| Inventiv e steel 9 | 0.041 | 0.014 | 0.26 | 0.014 | 0.034 | 0.007 | 0.006 | 0.003 |
| Inventiv e steel 10 | 0.041 | 0.015 | 0.25 | 0.015 | 0.034 | 0.007 | 0.006 | 0.003 |
| Inventiv e steel 11 | 0.041 | 0.015 | 0.25 | 0.014 | 0.038 | 0.007 | 0.006 | 0.003 |
| Inventiv e steel 12 | 0.039 | 0.014 | 0.23 | 0.016 | 0.037 | 0.006 | 0.006 | 0.003 |
| Inventiv e steel 13 | 0.040 | 0.016 | 0.23 | 0.015 | 0.033 | 0.007 | 0.006 | 0.003 |
| Inventiv e steel 14 | 0.040 | 0.014 | 0.27 | 0.014 | 0.033 | 0.007 | 0.006 | 0.003 |
| Inventiv e steel 15 | 0.039 | 0.014 | 0.26 | 0.014 | 0.037 | 0.007 | 0.005 | 0.003 |
| Inventiv e steel 16 | 0.039 | 0.016 | 0.26 | 0.014 | 0.033 | 0.007 | 0.006 | 0.003 |
| Inventiv e steel 17 | 0.041 | 0.016 | 0.26 | 0.016 | 0.036 | 0.006 | 0.006 | 0.003 |
| Inventiv e steel 18 | 0.041 | 0.015 | 0.25 | 0.015 | 0.032 | 0.007 | 0.006 | 0.003 |
| Inventiv e steel 19 | 0.039 | 0.014 | 0.27 | 0.015 | 0.038 | 0.007 | 0.007 | 0.0033 |
| Inventiv e steel 20 | 0.041 | 0.014 | 0.26 | 0.015 | 0.037 | 0.007 | 0.006 | 0.0027 |

(continued)

| Classifi cation | Component content (weight%) | | | | | | | |
|---|---|---|---|---|---|---|---|---|
| | C | Si | Mn | Cr | Al | P | S | N |
| Inventiv e steel 21 | 0.040 | 0.01 | 0.26 | 0.015 | 0.04 | 0.007 | 0.006 | 0.0027 |
| Comparat ive steel 1 | 0.016 | 0.014 | 0.20 | 0.016 | 0.037 | 0.007 | 0.005 | 0.003 |
| Comparat ive steel 2 | 0.067 | 0.014 | 0.27 | 0.016 | 0.035 | 0.008 | 0.006 | 0.003 |
| Comparat ive steel 3 | 0.040 | 0.016 | 0.06 | 0.016 | 0.036 | 0.008 | 0.006 | 0.003 |
| Comparat ive steel 4 | 0.039 | 0.014 | 0.68 | 0.014 | 0.032 | 0.007 | 0.006 | 0.003 |
| Comparat ive steel 5 | 0.032 | 0.014 | 0.56 | 0.015 | 0.033 | 0.007 | 0.006 | 0.003 |
| Comparat ive steel 6 | 0.056 | 0.014 | 0.33 | 0.014 | 0.033 | 0.007 | 0.006 | 0.003 |
| Comparat ive steel 7 | 0.042 | 0.014 | 0.34 | 0.035 | 0.035 | 0.008 | 0.006 | 0.003 |
| Comparat ive steel 8 | 0.039 | 0.015 | 0.35 | 0.051 | 0.034 | 0.007 | 0.006 | 0.003 |
| Comparat ive steel 9 | 0.040 | 0.015 | 0.24 | 0.014 | 0.035 | 0.007 | 0.006 | 0.003 |
| Comparat ive steel 10 | 0.041 | 0.014 | 0.24 | 0.014 | 0.035 | 0.007 | 0.006 | 0.003 |
| Comparat ive steel 11 | 0.040 | 0.015 | 0.24 | 0.015 | 0.033 | 0.007 | 0.006 | 0.003 |
| Comparat ive steel 12 | 0.039 | 0.016 | 0.27 | 0.016 | 0.032 | 0.006 | 0.006 | 0.003 |
| Comparat ive steel 13 | 0.039 | 0.015 | 0.23 | 0.016 | 0.037 | 0.007 | 0.006 | 0.003 |
| Comparat ive steel 14 | 0.039 | 0.016 | 0.26 | 0.016 | 0.036 | 0.007 | 0.006 | 0.003 |
| Comparat ive steel 15 | 0.039 | 0.015 | 0.26 | 0.015 | 0.032 | 0.007 | 0.006 | 0.003 |
| Comparat ive steel 16 | 0.040 | 0.014 | 0.25 | 0.015 | 0.036 | 0.007 | 0.006 | 0.003 |
| Comparat ive steel 17 | 0.039 | 0.014 | 0.27 | 0.016 | 0.036 | 0.007 | 0.006 | 0.003 |
| Comparat ive steel 18 | 0.041 | 0.015 | 0.24 | 0.016 | 0.037 | 0.006 | 0.006 | 0.003 |
| Comparat ive steel 19 | 0.041 | 0.016 | 0.25 | 0.014 | 0.032 | 0.006 | 0.006 | 0.0032 |
| Comparat ive steel 20 | 0.041 | 0.02 | 0.24 | 0.016 | 0.04 | 0.007 | 0.006 | 0.0027 |

*In Table 1, the residual components are Fe and inevitable impurities.

[Table 2]

| Classifica tion | Coiling temperatur e (°C) | Primary reduction rate (%) | Annealing temperatur e (°C) | Secondary reduction rate (%) | Alloying temperatur e (°C) | Alloying time (sec) |
|---|---|---|---|---|---|---|
| Inventive steel 1 | 648 | 84.3 | 737 | 1.20 | 675 | 20 |
| Inventive steel 2 | 646 | 84.6 | 741 | 1.20 | 675 | 20 |
| Inventive steel 3 | 647 | 84.3 | 741 | 1.20 | 675 | 20 |
| Inventive steel 4 | 652 | 84.5 | 747 | 1.20 | 675 | 20 |
| Inventive steel 5 | 653 | 84.4 | 738 | 1.20 | 675 | 20 |
| Inventive steel 6 | 604 | 84.9 | 741 | 1.20 | 675 | 20 |
| Inventive steel 7 | 709 | 84.8 | 739 | 1.20 | 675 | 20 |
| Inventive steel 8 | 646 | 80.0 | 741 | 1.20 | 675 | 20 |
| Inventive steel 9 | 646 | 85.0 | 735 | 1.20 | 675 | 20 |
| Inventive steel 10 | 645 | 88.0 | 740 | 1.20 | 675 | 20 |
| Inventive steel 11 | 650 | 85.5 | 682 | 1.20 | 675 | 20 |
| Inventive steel 12 | 649 | 85.6 | 746 | 1.20 | 675 | 20 |

(continued)

| Classifica tion | Coiling temperatur e (°C) | Primary reduction rate (%) | Annealing temperatur e (°C) | Secondary reduction rate (%) | Alloying temperatur e (°C) | Alloying time (sec) |
|---|---|---|---|---|---|---|
| Inventive steel 13 | 653 | 84.7 | 801 | 1.20 | 675 | 20 |
| Inventive steel 14 | 654 | 84.9 | 745 | 1. 20 | 650 | 29 |
| Inventive steel 15 | 651 | 85.0 | 734 | 1.20 | 675 | 10 |
| Inventive steel 16 | 655 | 84.7 | 740 | 1.20 | 675 | 20 |
| Inventive steel 17 | 646 | 84.5 | 741 | 1.20 | 675 | 30 |
| Inventive steel 18 | 646 | 84.4 | 746 | 1. 20 | 700 | 10 |
| Inventive steel 19 | 639 | 84.3 | 737 | 0.85 | 667 | 20 |
| Inventive steel 20 | 634 | 84.9 | 746 | 1.45 | 666 | 20 |
| Inventive steel 21 | 636 | 84.8 | 746 | 1.75 | 666 | 20 |
| Comparativ e steel 1 | 645 | 85.2 | 739 | 1.20 | 675 | 20 |
| Comparativ e steel 2 | 655 | 84.2 | 739 | 1.20 | 675 | 20 |
| Comparativ e steel 3 | 644 | - | - | - | - | - |
| Comparativ e steel 4 | 646 | 85.0 | 745 | 1.20 | 675 | 20 |
| Comparativ e steel 5 | 646 | 85.1 | 746 | 1.20 | 675 | 20 |
| Comparativ e steel 6 | 646 | 85.1 | 746 | 1.20 | 675 | 20 |
| Comparativ e steel 7 | 640 | 85.0 | 740 | 1.20 | 675 | 20 |
| Comparativ e steel 8 | 641 | 85.0 | 741 | 1.20 | 675 | 20 |
| Comparativ e steel 9 | 562 | 85.8 | 746 | 1.20 | 675 | 20 |
| Comparativ e steel 10 | 728 | 84.6 | 742 | 1.20 | 675 | 20 |
| Comparativ e steel 11 | 655 | 76.0 | 747 | 1.20 | 675 | 20 |
| Comparativ e steel 12 | 649 | 92.0 | - | - | - | - |
| Comparativ e steel 13 | 648 | 84.3 | 620 | 1.20 | 675 | 20 |
| Comparativ e steel 14 | 651 | 84.5 | 826 | 1.20 | 675 | 20 |
| Comparativ e steel 15 | 648 | 84.4 | 747 | 1. 20 | 640 | 30 |
| Comparativ e steel 16 | 644 | 85.4 | 735 | 1.20 | 650 | 20 |
| Comparativ e steel 17 | 645 | 85.4 | 741 | 1.20 | 700 | 15 |
| Comparativ e steel 18 | 647 | 85.8 | 741 | 1.20 | 710 | 10 |
| Comparativ e steel 19 | 635 | 85.2 | 739 | 0.71 | - | - |
| Comparativ e steel 20 | 643 | 85.1 | 734 | 1. 89 | 670 | 20 |

As for each steel sheet manufactured as above, the component index, ASTM grain size, average carbide size, thickness of the alloy layer, tensile properties at room temperature and 600°C, plating layer adhesion, and shape freezing were calculated or evaluated, and the results are listed in Table 3 and Table 4 below.

The number of ASTM grains may be an index correlated with a grain size, and was calculated and measured from an image obtained through optical microstructure observation according to the ASTM E112 standard (standard test methods for determining average grain size). It may be indicted that, as the number of ASTM grains increases, an average grain size may decrease.

Also, the equivalent circular average carbide size may indicate the average carbide size confirmed during structure observation for the finally manufactured material. In this case, carbide may indicate all carbides confirmed through general structure observation, and may include a cementite phase, a pearlite phase, or the like, and the difference between phases may not be considered.

Also, the thickness of the alloy layer indicates the thickness of the component change layer positioned between the steel sheet and the Ni plating layer, and including both Fe and Ni components by diffusion, and may be measured through GDS (glow discharge spectrometer) or EDS (energy dispersive X-ray spectrometer) measurement of the cross section of the plated steel sheet. Generally, as for the component of the alloy layer, the Fe content may be higher in the internal region close to the steel sheet, and the Ni content may be higher in the outer region close to the plating layer. In the present disclosure, the thickness of the alloy layer was defined as the length from the point having 5% of Fe to the point having 5% of Ni by weight%. This may be because, when each point is defined as a point at which the component is 0%, measurement errors may occur as it may be difficult to determine the exact point.

The yield strength and elongation at room temperature were measured through a tensile test at room temperature. The room-temperature tensile sample was measured by tensioning at a speed of 10 mm/min using the JIS-5 standard. The 600°C yield strength was measured through a high-temperature tensile test in which the sample was held at 600°C for 10 minutes and tensioned at a speed of 0.04 mm/s. As for the high-temperature tensile test, the sample was an ASTM E8 plate-type standard sample having a width of 12.5 mm, heated to 600°C at a temperature rising rate of 5-10°C/sec, and tensioned for 10 minutes to ensure uniformity of the sample temperature and atmosphere.

The plating adhesion indicates the degree of bonding of the plating layer to the steel sheet, and was evaluated by observing the surface through an optical microscope after forming a cylindrical battery case. When cracks of 10 $\mu$m or more were created in the surface portion during observation after forming, it was determined that the corrosion-resistant role of the plating layer was lost, and thus, the plating adhesion was determined to be defective.

Shape freezing may be an indicator of the degree to which the shape is maintained without changing after forming as a structure at room temperature, and was evaluated by measuring the difference in shape immediately after forming of a cylindrical battery case and after manufacturing a battery and charging/discharging once or more times. When a shape difference of 0.3 mm or more occurred immediately after forming and after manufacturing and charging/discharging, the shape freezing was determined to be defective.

Also, the steel sheet shape defect, steel sheet cracks occur during battery case forming, shear cross-section shape defect during shearing, the case in which corrosion resistance was not sufficient after plating in further manufacturing were listed in notes. In the case of corrosion resistance, when spot rust was observed in the salt spray test (SST) in which a 5 wt% NaCl aqueous solution was sprayed at a temperature of 35°C and a relative humidity of 95% for 6 hours, it was determined to be below the standard. When a burr of 0.3 $\mu$m or more occurred during shearing, the shear shape was determined to be defective.

[Table 3]

| Classifica tion | Component index | ASTM grain size | Average carbide size ($\mu$m) | Alloying index | Thickness of alloy layer ($\mu$m) |
|---|---|---|---|---|---|
| Inventive steel 1 | 0.48 | 11.14 | 1.4 | 2.36 | 0.90 |
| Inventive steel 2 | 0.67 | 11.30 | 1.5 | 2.36 | 1.00 |
| Inventive steel 3 | 0.78 | 11.50 | 1.6 | 2.36 | 1.03 |
| Inventive steel 4 | 0.64 | 11.32 | 1.6 | 2.36 | 0.96 |
| Inventive steel 5 | 0.74 | 11.66 | 1.5 | 2.36 | 0.96 |
| Inventive steel 6 | 0.65 | 11.56 | 1.1 | 2.36 | 1.08 |
| Inventive steel 7 | 0.63 | 11.31 | 1.8 | 2.36 | 0.99 |
| Inventive steel 8 | 0.65 | 11.13 | 1.5 | 2.36 | 0.97 |
| Inventive steel 9 | 0.67 | 11.37 | 1.4 | 2.36 | 0.93 |
| Inventive steel 10 | 0.66 | 11.59 | 1.6 | 2.36 | 1.10 |
| Inventive steel 11 | 0.66 | 11.40 | 1.5 | 2.36 | 0.91 |
| Inventive steel 12 | 0.62 | 11.22 | 1.4 | 2.36 | 1.01 |
| Inventive steel 13 | 0.63 | 11.17 | 1.4 | 2.36 | 0.91 |
| Inventive steel 14 | 0.67 | 11.22 | 1.5 | 2.10 | 0.86 |
| Inventive steel 15 | 0.65 | 11.26 | 1.5 | 2.20 | 0.92 |
| Inventive steel 16 | 0.65 | 11.25 | 1.5 | 2.36 | 1.10 |
| Inventive steel 17 | 0.67 | 11.30 | 1.5 | 2.46 | 1.26 |

(continued)

| Classifica tion | Component index | ASTM grain size | Average carbide size (μm) | Alloying index | Thickness of alloy layer (μm) |
|---|---|---|---|---|---|
| Inventive steel 18 | 0.66 | 11.27 | 1.6 | 2.52 | 1.38 |
| Inventive steel 19 | 0.66 | 11.44 | 1.5 | 2.25 | 1.09 |
| Inventive steel 20 | 0.67 | 11.25 | 1.5 | 2.24 | 1.02 |
| Inventive steel 21 | 0.66 | 11.30 | 1.5 | 2.24 | 0.97 |
| Comparativ e steel 1 | 0.36 | 10.95 | 0.9 | 2.36 | 1.00 |
| Comparativ e steel 2 | 0.94 | 11.76 | 2.1 | 2.36 | 0.92 |
| Comparativ e steel 3 | 0.46 | - | - | - | - |
| Comparativ e steel 4 | 1.07 | 11.64 | 1.4 | 2.36 | 1.03 |
| Comparativ e steel 5 | 0.88 | 11.65 | 1.7 | 2.36 | 1.05 |
| Comparativ e steel 6 | 0.89 | 11.72 | 1.3 | 2.36 | 1.04 |
| Comparativ e steel 7 | 0.76 | 11.30 | 1.5 | 2.36 | 1.00 |
| Comparativ e steel 8 | 0.74 | 11.35 | 1.6 | 2.36 | 0.95 |
| Comparativ e steel 9 | 0.64 | 11.82 | 0.9 | 2.36 | 1.01 |
| Comparativ e steel 10 | 0.65 | 10.76 | 2.3 | 2.36 | 1.02 |
| Comparativ e steel 11 | 0.64 | 10.50 | 1.4 | 2.36 | 1.04 |
| Comparativ e steel 12 | 0.66 | - | - | - | - |
| Comparativ e steel 13 | 0.62 | 11.25 | 1.4 | 2.36 | 1.86 |
| Comparativ e steel 14 | 0.65 | 10.85 | 1.5 | 2.36 | 1.06 |
| Comparativ e steel 15 | 0.65 | 11.27 | 1.6 | 1.97 | 0.45 |
| Comparativ e steel 16 | 0.65 | 11.42 | 1.6 | 2.02 | 0.58 |
| Comparativ e steel 17 | 0.66 | 11.33 | 1.5 | 2.62 | 1.45 |
| Comparativ e steel 18 | 0.65 | 11.80 | 1.4 | 2.64 | 1.56 |
| Comparativ e steel 19 | 0.66 | - | - | - | - |
| Comparativ e steel 20 | 0.65 | 11.31 | 1.4 | 2.29 | 0.96 |

[Table 4]

| Classif ication | Room-temperatur e yield strength (MPa) | Room-temperatur e elongation (%) | 600°C yield strength (MPa) | Plating adhesion | Shape freezing | Notes |
|---|---|---|---|---|---|---|
| Inventi ve steel 1 | 334.5 | 32.2 | 80.5 | Good | Good | - |
| Inventi ve steel 2 | 350.4 | 31.4 | 83.4 | Good | Good | - |
| Inventi ve steel 3 | 378.5 | 30.5 | 85.2 | Good | Good | - |
| Inventi ve steel 4 | 358.8 | 32.5 | 85.7 | Good | Good | - |
| Inventi ve steel 5 | 389.0 | 31.4 | 88.9 | Good | Good | - |
| Inventi ve steel 6 | 385.4 | 31.1 | 86.4 | Good | Good | - |

(continued)

| Classification | Room-temperature yield strength (MPa) | Room-temperature elongation (%) | 600°C yield strength (MPa) | Plating adhesion | Shape freezing | Notes |
|---|---|---|---|---|---|---|
| Inventive steel 7 | 358.7 | 31.9 | 84.2 | Good | Good | - |
| Inventive steel 8 | 339.8 | 32.1 | 82.4 | Good | Good | - |
| Inventive steel 9 | 351.9 | 31.5 | 86.8 | Good | Good | - |
| Inventive steel 10 | 386.5 | 30.2 | 89.9 | Good | Good | - |
| Inventive steel 11 | 370.6 | 32.2 | 85.3 | Good | Good | - |
| Inventive steel 12 | 359.1 | 31.7 | 84.8 | Good | Good | - |
| Inventive steel 13 | 346.5 | 32.6 | 84.2 | Good | Good | - |
| Inventive steel 14 | 369.6 | 32.2 | 85.1 | Good | Good | - |
| Inventive steel 15 | 357.9 | 31.3 | 83.4 | Good | Good | - |
| Inventive steel 16 | 358.6 | 31.5 | 84.4 | Good | Good | - |
| Inventive steel 17 | 355.9 | 31.1 | 85.6 | Good | Good | - |
| Inventive steel 18 | 362.7 | 31.6 | 85.5 | Good | Good | - |
| Inventive steel 19 | 342.0 | 32.7 | 86.3 | Good | Good | - |
| Inventive steel 20 | 385.0 | 31.7 | 84.0 | Good | Good | - |
| Inventive steel 21 | 392.0 | 31.3 | 86.4 | Good | Good | - |
| Comparative steel 1 | 315.0 | 33.6 | 78.4 | Good | Defective | - |
| Comparative steel 2 | 402.4 | 28.6 | 93.3 | Good | Good | Processing cracks |
| Comparative steel 3 | - | - | - | - | - | Hot-rolled sheet cracks |
| Comparative steel 4 | 415.6 | 27.6 | 85.6 | Good | Good | Processing cracks |
| Comparative steel 5 | 402.6 | 29.8 | 86.4 | Good | Good | Processing cracks |
| Comparative steel 6 | 407.4 | 29.4 | 87.6 | Good | Good | Processing cracks |
| Comparative steel 7 | 385.5 | 31.6 | 86.6 | Defective | Good | Plating surface Defective |

(continued)

| Classification | Room-temperature yield strength (MPa) | Room-temperature elongation (%) | 600°C yield strength (MPa) | Plating adhesion | Shape freezing | Notes |
|---|---|---|---|---|---|---|
| Comparative steel 8 | 382.2 | 30.8 | 85.9 | Defective | Good | Plating surface Defective |
| Comparative steel 9 | 415.6 | 32.8 | 94.5 | Good | Good | - |
| Comparative steel 10 | 333.4 | 29.4 | 78.5 | Good | Good | Processing cracks |
| Comparative steel 11 | 305.6 | 34.5 | 76.4 | Good | Defective | - |
| Comparative steel 12 | - | - | - | - | - | Rolling shape Defective |
| Comparative steel 13 | 245.5 | 36.8 | 83.6 | Good | Defective | - |
| Comparative steel 14 | 333.3 | 33.4 | 72.3 | Good | Good | - |
| Comparative steel 15 | 355.4 | 32.4 | 86.5 | Defective | Good | - |
| Comparative steel 16 | 370.7 | 32.5 | 87.4 | Defective | Good | - |
| Comparative steel 17 | 364.4 | 31.1 | 84.6 | Good | Good | Corrosion resistance Defective |
| Comparative steel 18 | 326.5 | 32.3 | 78.4 | Good | Good | Corrosion resistance Defective |
| Comparative steel 19 | - | - | - | - | - | Secondary rolling shape Defective |
| Comparative steel 20 | 416.0 | 31.8 | 87.0 | Good | Good | |

As indicated in Table 1-4, inventive steel 1-21 satisfied the entirety of the component content and manufacturing conditions suggested in the present disclosure. When satisfying the component index of 0.85 or less, carbide size of 1.0-2.0 $\mu$m, and thickness of the alloy layer of 0.6-1.4 $\mu$m suggested by the present inventors, room-temperature yield strength was 320-400 MPa, room-temperature elongation was 30% or more, and 600°C yield strength was 80 MPa or more, such that good mechanical properties was obtained, and plating adhesion and shape freezing properties were good, such that the required characteristics as a cylindrical battery case material were satisfied. Specifically, inventive steel 1-3 exhibits the influence of C content change, inventive steel 4-5 exhibits the influence of Mn content change, inventive steel 6-7 exhibits the influence of coiling temperature change, inventive steel 8-10 exhibits the influence of primary cold reduction rate change, inventive steel 11-13 exhibits the influence of annealing temperature change, inventive steel 14-16 exhibits the influence of secondary cold reduction rate change, and inventive steel 17-19 exhibits the influence of alloying temperature change. It is indicated that all the required properties may be satisfied within the range of manufacturing conditions suggested by the present inventors.

In contrast, in comparative steel 1, the C content was less than 0.02%, which was low, and the grains were large, less than ASTM grain size 11, and the carbides were formed small, less than 1.0. As grains were formed large, the room-temperature yield strength was low, less than 320 MPa, the 600°C yield strength was low, less than 80 MPa, and the carbides were formed small, such that the shear shape was defective. In comparative steel 2, the C content exceeded 0.06%, and the component index exceeded 0.85, such that the room-temperature strength exceeded 400 MPa, and the elongation was low, less than 30%, and the carbides were formed to be large at 2.0 $\mu$m or more, such that cracks were created during processing.

In comparative steel 3, the Mn content was low, less than 0.1%, and cracks were created at the edges of the hot-rolled steel sheet during hot-rolling. High-temperature brittleness may be induced by solid-solution S, and when combined with Mn and precipitated in the form of MnS, brittleness may be suppressed. However, in this example, Mn content was low and was not sufficiently precipitated, such that cracks were created.

In comparative steel 4-6, the component index exceeded 0.85, and the yield strength at room temperature exceeded 400 MPa, and the elongation was less than 30%, such that cracks were created during processing.

In comparative steel 7-8, the Cr content exceeded 0.03%, and the surface was not plated, such that the plating surface was defective. Accordingly, when unplating occurred, spot rust occurred on the exposed steel sheet, such that it may be difficult to ensure corrosion resistance.

In comparative steel 9, the hot-rolled steel sheet coiling temperature was lower than 580°C, and the grains are formed to be small, exceeding the ASTM grain size 11.8, such that the 600°C yield strength exceeded 90 MPa, which may be advantageous for ensuring safety. However, the average carbide size was formed small, less than 1.0 $\mu$m, such that the shear shape was defective, and the room temperature strength exceeded 400 MPa, which may cause severe die wear, which was not preferable. On the other hand, in comparative steel 10, the coiling temperature exceeded 720°C, and the grains were formed coarsely, less than the ASTM grain size 11.0, and the average carbide size exceeded 2.0 $\mu$m, which was large. As a result, the 600°C yield strength was insufficient, less than 80 MPa, and the elongation was less than 30%, such that cracks occurred during battery case molding.

In comparative steel 11, the primary cold reduction ratio was low at less than 78%, and grain nucleation was not performed properly, such that grains were formed coarsely, the ASTM grain of less than 11.0. As a result, the room-temperature yield strength was low at less than 320 MPa, such that shape freezing was defective, and the yield strength at 600°C was low, and accordingly, it may be difficult to ensure safety at high temperature. In comparative steel 12, the primary cold reduction ratio exceeded 90%, and the shape of the steel sheet after cold-rolling was defective, such that it may be difficult to perform to the subsequent process, the annealing process.

In comparative steel 13, the primary cold steel sheet annealing temperature was low, less than 630°C, such that recrystallization did not occur in the primary-cold-rolled steel sheet annealing process, and recrystallization occurred in the alloying-annealing process. In the present disclosure, the high-temperature accelerated aging effect in which strength increases as solid-solution carbon is fixed at dislocations at high temperatures during alloying-annealing was tried to be obtained. However, it was difficult to obtain such an effect when recrystallization did not occur during primary-cold-rolled steel sheet annealing. As a result, the room-temperature yield strength was significantly low, less than 250 MPa, and the shape fixability was defective. Also, recrystallization occurred during alloying-annealing, and the diffusion rate was high such that the thickness of the alloy layer exceeded 1.4 $\mu$m, which was great. As a result, Fe was exposed to the surface of the plating layer, such that the corrosion resistance was also defective. In comparative Steel 14, the primary-cold-rolled steel sheet annealing temperature exceeded 810°C, such that the grain size was formed to be less than ASTM grain size 11.0. As a result, the 600°C yield strength was low, less than 80 MPa, and the safety at high temperature was poor.

In comparative steel 15-18, the alloying index defined by relational expression 2 did not satisfy the range of 2.1-2.6. When the alloying index is less than 2.1, the thickness of the alloy layer was too small, such that plating layer adhesion was defective. When the alloying index exceeded 2.6, the thickness of the alloy layer was too great, such that corrosion resistance was defective. Specifically, in comparative example 15, the temperature was lower than 650°C, such that even when the annealing was long, 30 seconds, the thickness of the alloy layer was formed too small. When the annealing was long, 30 seconds or more, the manufacturing time was long, resulting in low productivity. In comparative example 18, the temperature exceeded 700°C, and even when the annealing was short, 10 seconds, the thickness of the alloy layer was formed too great. When the annealing time was short, it was difficult to control at high temperature, resulting in a large deviation.

In comparative steel 19, a secondary cold reduction ratio was less than 0.8%, and the shape was defective after secondary-cold-rolling. This may be because the secondary cold reduction ratio was low, it may be difficult to sufficiently improve the shape of a partially deformed steel sheet during annealing at high temperature. In comparative steel 20, the secondary cold reduction ratio exceeded 1.8%, and the room-temperature yield strength exceeded 400 MPa due to the work hardening effect during cold-rolling, causing significant die wear, which was not preferable.

As described above, in the detailed description of the present disclosure, described preferable embodiments of the present disclosure has been described; however, it will be apparent to those skilled in the art to which the present disclosure belongs to that various modification may be made without departing from the scope of the present disclosure. Accordingly, the scope of the rights of the present disclosure should not be limited to the described embodiments, but may be determined not only by the scope of the claims described below but also by equivalents thereof.

**Claims**

1. An Ni-plated steel sheet for canning, comprising:

   by weight%, C: 0.020-0.060%, Si: 0.050% or less, Mn: 0.1-0.6%, Al: 0.010-0.060%, P: 0.015% or less, S: 0.015% or less, N: 0.006% or less, Cr: less than 0.030%, and the balance of Fe and inevitable impurities, and having a component index of 0.85 or less, the component index represented by relational expression 1,
   wherein an ASTM grain size satisfies 11.00-11.70,
   wherein the steel sheet has a steel microstructure containing carbides having an equivalent circular average size satisfying 1.0-2.0 $\mu$m,
   wherein an Fe-Ni alloy layer having a thickness of 0.6-1.4 $\mu$m is formed on a surface thereof:

$$[Relational\ expression\ 1]$$

$$component\ index = C \times 10 + Mn$$

   where C and Mn indicate weight% of C and Mn, respectively.

2. The Ni-plated steel sheet for canning of claim 1, wherein the plated steel sheet has a microstructure containing 90% or more of ferrite and 10% or less of cementite by area%.

3. The Ni-plated steel sheet for canning of claim 1, wherein a room-temperature yield strength of the Ni-plated steel sheet satisfies 320-400MPa, a room-temperature elongation satisfies 30% or more, and a yield strength at 600°C satisfies 80MPa or more.

4. A method of manufacturing an Ni-plated steel sheet for canning, the method comprising:

   reheating a steel slab including, by weight%, C: 0.020-0.060%, Si: 0.050% or less, Mn: 0.1-0.6%, Al: 0.010-0.060%, P: 0.015% or less, S: 0.015% or less, N: 0.006% or less, Cr: less than 0.030%, and the balance of Fe and inevitable impurities, and having a component index satisfying 0.85 or less, the component index represented by relational expression 1, at 1150°C or higher;
   manufacturing a hot-rolled steel sheet by hot finishing rolling the reheated steel slab at Ar$_3$ or higher;
   cooling the hot-rolled steel sheet and coiling the steel sheet at a temperature of 580-720°C;
   manufacturing a primary-cold-rolled steel sheet by primary-cold-rolling the coiled hot-rolled steel sheet at a reduction ratio of 78-90%;
   annealing the primary-cold-rolled steel sheet at a temperature of 630-810°C;
   manufacturing a secondary-cold-rolled steel sheet by secondary-cold-rolling the annealed steel sheet at a reduction ratio of 0.6-1.2%;
   manufacturing a Ni-plated steel sheet by Ni-electroplating the secondary-cold-rolled steel sheet; and
   forming an Fe-Ni alloy layer having a thickness of 0.6-1.4 $\mu$m on a surface of a cold-rolled steel sheet by performing alloying-annealing the Ni-plated steel sheet at a temperature of 650-700°C for a period of time in which an alloying index defined in relational expression 2 satisfies 2.10-2.60:

$$[Relational\ expression\ 1]$$

$$component\ index = C \times 10 + Mn$$

   where C and Mn indicate weight% of C and Mn, respectively.

[Relational expression 2]

alloying index = (2 - (700 - T) / 100) × $t^{0.1}$

where T indicates temperature (°C) and t indicates time (seconds).

5. The method of claim 4, wherein the Ni-electroplating is performed in a thickness range of 0.6-5.0 μm.

[Relational expression 2]

alloying index = (2 - (700 - T) / 100) × $t^{0.1}$

## INTERNATIONAL SEARCH REPORT

| International application No. |
|---|
| **PCT/KR2023/018351** |

| A. | CLASSIFICATION OF SUBJECT MATTER |
|---|---|

**C25D 7/06**(2006.01)i; **C25D 5/36**(2006.01)i; **C25D 5/50**(2006.01)i; **C22C 38/18**(2006.01)i; **C22C 38/00**(2006.01)i; **C21D 8/02**(2006.01)i; **B21C 47/02**(2006.01)i

According to International Patent Classification (IPC) or to both national classification and IPC

| B. | FIELDS SEARCHED |
|---|---|

Minimum documentation searched (classification system followed by classification symbols)

C25D 7/06(2006.01); C21D 8/02(2006.01); C21D 8/04(2006.01); C21D 9/46(2006.01); C21D 9/48(2006.01); C22C 38/02(2006.01); C22C 38/26(2006.01); C25D 5/50(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니켈(nickel), 도금(plating), 소둔(annealing), 망간(manganese), 결정립(grain), 두께 (thickness)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0132975 A (NIPPON STEEL CORPORATION) 25 November 2020 (2020-11-25) See paragraphs [0077]-[0092], [0106], [0110]-[0119], [0139]-[0142], [0150] and [0166]-[0167], claims 1 and 4, tables 1 and 3-4 and figure 1a. | 1-5 |
| A | KR 10-2019-0131084 A (NIPPON STEEL CORPORATION) 25 November 2019 (2019-11-25) See paragraphs [0078]-[0110] and [0142]-[0166], claims 1 and 5 and table 1. | 1-5 |
| A | JP 09-241759 A (NKK CORP.) 16 September 1997 (1997-09-16) See paragraphs [0009]-[0010] and [0031]-[0036] and claims 1-3. | 1-5 |
| A | WO 2019-198820 A1 (NIPPON STEEL CORPORATION) 17 October 2019 (2019-10-17) See paragraphs [0027]-[0030] and [0072]-[0085] and table 1. | 1-5 |
| A | KR 10-2019-0078406 A (POSCO) 04 July 2019 (2019-07-04) See claims 1-14 and tables 1-2. | 1-5 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 February 2024** | **16 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | | International application No. |
|---|---|---|
| | | **PCT/KR2023/018351** |

| Patent document cited in search report | | | Publication date (day/month/year) | Patent family member(s) | | | Publication date (day/month/year) |
|---|---|---|---|---|---|---|---|
| KR | 10-2020-0132975 | A | 25 November 2020 | CN | 111989424 | A | 24 November 2020 |
| | | | | JP | 6943335 | B2 | 29 September 2021 |
| | | | | KR | 10-2428145 | B1 | 02 August 2022 |
| | | | | US | 2021-0032765 | A1 | 04 February 2021 |
| | | | | WO | 2019-198819 | A1 | 17 October 2019 |
| KR | 10-2019-0131084 | A | 25 November 2019 | CN | 110573641 | A | 13 December 2019 |
| | | | | EP | 3613867 | A1 | 26 February 2020 |
| | | | | EP | 3613867 | B1 | 12 January 2022 |
| | | | | JP | 6428986 | B1 | 28 November 2018 |
| | | | | JP | WO2018-194135 | A1 | 25 April 2019 |
| | | | | KR | 10-2302471 | B1 | 16 September 2021 |
| | | | | SG | 11201909620 | A | 28 November 2019 |
| | | | | US | 10907236 | B2 | 02 February 2021 |
| | | | | US | 2020-0048730 | A1 | 13 February 2020 |
| | | | | WO | 2018-194135 | A1 | 25 October 2018 |
| JP | 09-241759 | A | 16 September 1997 | JP | 3814865 | B2 | 30 August 2006 |
| WO | 2019-198820 | A1 | 17 October 2019 | CN | 111971419 | A | 20 November 2020 |
| | | | | JP | 2020-198820 | A1 | 30 April 2020 |
| | | | | JP | 6638874 | B1 | 29 January 2020 |
| | | | | JP | WO2019-198820 | A1 | 30 April 2020 |
| | | | | KR | 10-2020-0138372 | A | 09 December 2020 |
| | | | | KR | 10-2416183 | B1 | 05 July 2022 |
| | | | | US | 11827996 | B2 | 28 November 2023 |
| | | | | US | 2021-0147996 | A1 | 20 May 2021 |
| KR | 10-2019-0078406 | A | 04 July 2019 | CN | 111527228 | A | 11 August 2020 |
| | | | | CN | 111527228 | B | 21 December 2021 |
| | | | | EP | 3733906 | A1 | 04 November 2020 |
| | | | | JP | 2021-509435 | A | 25 March 2021 |
| | | | | JP | 7096889 | B2 | 06 July 2022 |
| | | | | KR | 10-2045654 | B1 | 15 November 2019 |
| | | | | US | 11578379 | B2 | 14 February 2023 |
| | | | | US | 2021-0062283 | A1 | 04 March 2021 |
| | | | | WO | 2019-132384 | A1 | 04 July 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190078406
- KR 19990053991
- KR 20180109964
- KR 20210091795